# EUROPEAN PATENT SPECIFICATION

(11) **EP 3 102 390 B1**
(45) Date of publication and mention of the grant of the patent: **08.04.2020**
(21) Application number: 15747079.0
(22) Date of filing: 04.02.2015
(51) Int. Cl.: B22F 3/105, B22F 3/24, B29C 64/153, B33Y 50/02

(54) **A SELF-MONITORING ADDITIVE MANUFACTURING SYSTEM AND METHOD OF OPERATION**
SELBSTÜBERWACHENDES SYSTEM ZUR ADDITIVEN FERTIGUNG UND VERFAHREN ZUM BETRIEB
SYSTÈME D'IMPRESSION 3D À AUTO-SURVEILLANCE ET PROCÉDÉ DE FONCTIONNEMENT

(30) Priority: 05.02.2014 US 201461936075 P
(43) Date of publication of application: 14.12.2016
(73) Proprietor: United Technologies Corporation, Farmington, CT 06032 (US)
(72) Inventor: LONG, Yu, Ithaca NY 14850 (US)
(74) Representative: Dehns
(86) International application number: PCT/US2015/014456
(87) International publication number: WO 2015/120047

(56) References cited:
- EP-A1- 1 296 788
- WO-A1-2013/098054
- JP-A- 2010 090 350
- US-A- 5 460 758
- US-A1- 2004 173 946
- US-A1- 2006 249 884
- US-A1- 2009 152 771
- US-A1- 2009 206 065
- US-A1- 2010 111 744
- US-A1- 2011 032 301
- US-A1- 2013 101 803
- BARUA S ET AL: "Vision-based defect detection in laser metal deposition process", RAPID PROTOTYPING JOURNAL, vol. 20, no. 1, 2014, pages 77-86, XP002765896, EMERALD GROUP PUBLISHING LTD. GBR DOI: 10.1108/RPJ-04-2012-0036
- UNOCIC R R ET AL: "Process efficiency measurements in the laser engineered net shaping process", METALLURGICAL AND MATERIALS TRANSACTIONS B, vol. 35, no. 1, 1 February 2004 (2004-02-01), pages 143-152, XP019697556, SPRINGER-VERLAG, NEW YORK ISSN: 1543-1916

## Description

### BACKGROUND

The present disclosure relates to an additive manufacturing system and, more particularly, to a self-monitoring additive manufacturing system and method of operation.

Traditional additive manufacturing systems include, for example, Additive Layer Manufacturing (ALM) devices, such as Direct Metal Laser Sintering (DMLS), Selective Laser Melting (SLM), Laser Beam Melting (LBM) and Electron Beam Melting (EBM) that provide for the fabrication of complex metal, alloy, polymer, ceramic and composite structures by the freeform construction of the workpiece, layer-by-layer. The principle behind additive manufacturing processes involves the selective melting of atomized precursor powder beds by a directed energy source, producing the lithographic build-up of the workpiece. The melting of the powder occurs in a small localized region of the energy beam, producing small volumes of melting, called melt pools, followed by rapid solidification, allowing for very precise control of the solidification process in the layer-by-layer fabrication of the workpiece. These devices are directed by three-dimensional geometry solid models developed in Computer Aided Design (CAD) software systems.

The EBM system utilizes an electron beam gun and the DMLS, SLM, and LBM systems utilize a laser as the energy source. Both system beam types are focused by a lens, then deflected by an electromagnetic scanner or rotating mirror so that the energy beam selectively impinges on a powder bed. The EBM system uses a beam of electrons accelerated by an electric potential difference and focused using electromagnetic lenses that selectively scans the powder bed. The DMLS, SLM and LBM utilize a focused laser beam scanned by a rotating mirror. The EBM technology offers higher power densities, and therefore faster scanning rates, over lasers, and is capable of processing superalloys. The powder is melted at the energy focus site on the build surface or substrate. The strategy of the scanning, power of the energy beam, residence time or speed, and sequence of melting are directed by an embedded CAD system. The precursor powder is either gravitationally fed from cassettes or loaded by a piston so that it can be raked onto the build table. The excess powder is raked off and collected for re-application. Since the electron gun or laser is fixed, the build table can be lowered with each successive layer so that the workpiece is built upon the pre-solidified layer beneath.

Unfortunately, known additive manufacturing processes and systems may produce defects that can jam or stop a manufacturing process and/or are not easily fixed or identifiable after the additive manufacturing process is completed. There is a need in the art for improved defect detection and correction.

US 2004/173946 A1 discloses features of the preamble of claim 1. EP 1296788 A1, US 2010/0111744 A1 and Unocic et al.: "Process efficiency measurements in the laser engineered net shaping process" each relate to devices and methods which may be employed to create 3D objects. WO 2013/098054 A1, US 2009/206065 A1 and Barua S et al: "Vision-based defect detection in laser metal deposition process" each relate to defect detection in 3D object fabrication.

### SUMMARY

A powder-bed additive manufacturing system according to one aspect of the present invention, is claimed in claim 1.

In the alternative or additionally thereto, in the foregoing embodiment, the surface monitor is a profilometer.

In the alternative or additionally thereto, in the foregoing embodiment, the surface monitor is an interferometer.

In the alternative or additionally thereto, in the foregoing embodiment, the energy gun is a laser gun.

In the alternative or additionally thereto, in the foregoing embodiment, the energy gun is an electron beam gun.

In the alternative or additionally thereto, in the foregoing embodiment, the anomalies include at least one of porosity and cracking.

A method of operating a powder-bed additive manufacturing system, according to another aspect of the present invention, is claimed in claim 6.

In the alternative or additionally thereto, in the foregoing embodiment, forming at least a portion includes the steps of creating a melt pool in a layer of a raw material with an energy gun, and solidifying the melt pool.

In the alternative or additionally thereto, in the foregoing embodiment, the method includes the steps of forming a second portion of the slice through the creation of another melt pool in the layer with the heat gun, solidifying the second portion, and monitoring a surface of the second portion for an anomaly.

The foregoing features and elements may be combined in various combinations without exclusivity, unless expressly indicated otherwise. These features and elements as well as the operation thereof will become more apparent in-light of the following description and the accompanying drawings. It should be understood, however, the following description and figures are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic view of an additive manufacturing system according to one non-limiting embodiment of the present disclosure;
FIG. 2 is a plan view of a powder bed of the additive manufacturing system viewed in the direction of arrows 2-2 in FIG. 1;
FIG. 3 is a plan view of a surface of a workpiece having anomalies;
FIG. 4 is a perspective cross sectional view of the workpiece having anomalies;
FIG. 5 is a perspective view of another workpiece having anomalies; and
FIG. 6 is a flow chart of a method of operating the additive manufacturing system.

### DETAILED DESCRIPTION

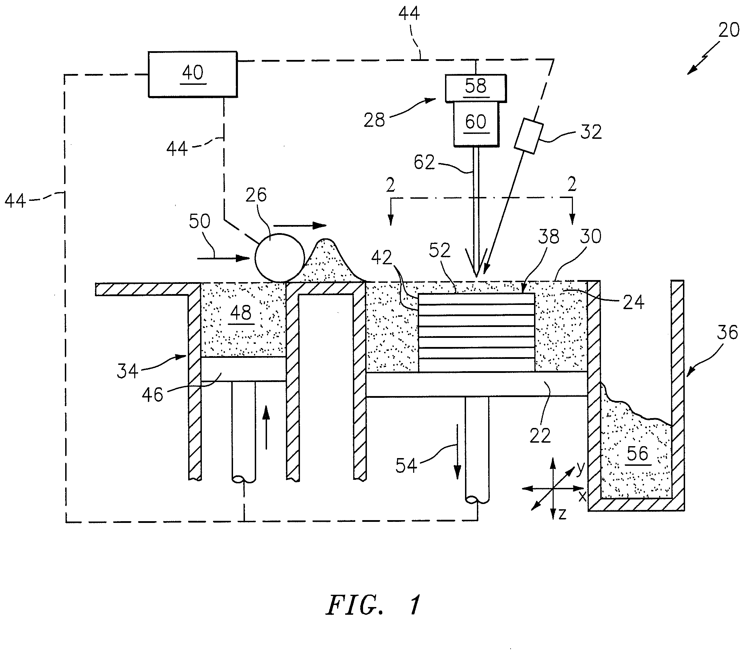

FIG. 1 schematically illustrates an additive manufacturing system 20 having a build table 22 for holding a powder bed 24, a particle spreader or wiper 26 for producing the powder bed 24, an energy gun 28 for selectively melting regions of a layer 30 of the powder bed, a volumetric imaging monitor 32, a powder supply hopper 34 and a powder surplus hopper 36. The additive manufacturing system 20 is constructed to build a workpiece 38 in a layer-by-layer fashion utilizing an additive manufacturing process controlled by an electrical controller 40 that may have an integral computer aided design system for modeling the workpiece 38 into a plurality of slices 42 additively built atop one-another generally in a vertical or z-coordinate direction.

The controller 40 controls the various components and operations through electric signals 44 that may be hard-wired, or wirelessly coupled, between one or more of the system components 22, 26, 28, 32, 34. The controller 40 may be implemented with a combination of hardware and software. The hardware may include memory and one or more single-core and/or multi-core processors. The memory may be a non-transitory computer readable medium, and adapted to store the software (e.g. program instructions) for execution by the processors. The hardware may also include analog and/or digital circuitry other than that described above.

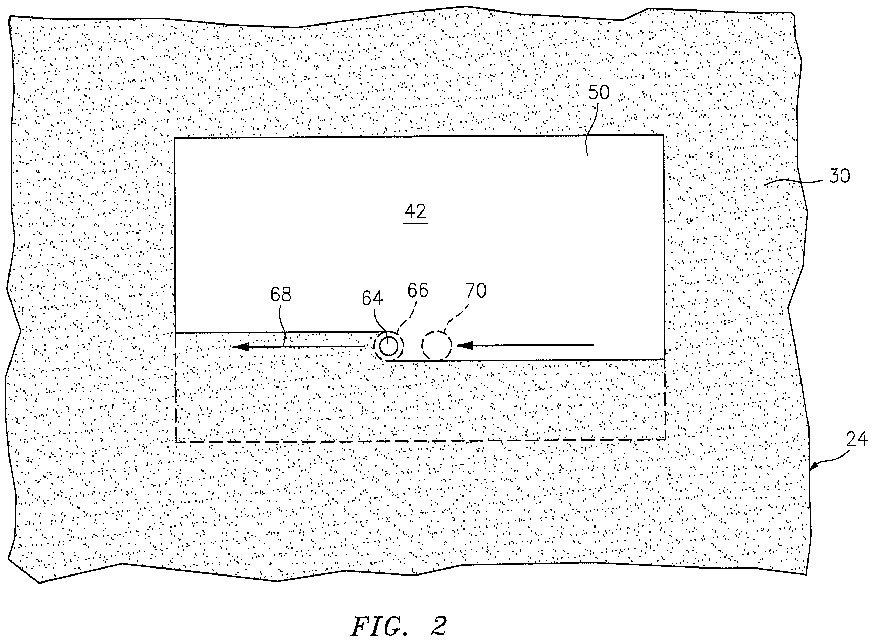

Referring to FIGS. 1 and 2, each solidified slice 42 of the workpiece 38 is associated with and produced from a respective layer 30 of the powder bed 24 prior to solidification. The powder layer 30 is placed on top of (or spread over) a build surface 50 of the previously solidified slice 42, or during initial operation, the build table 22. The controller 28 operates the system 20 through the series of electrical and/or digital signals 44 sent to the system 20 components. For instance, the controller 28 may send a signal 44 to a mechanical piston 46 of the supply hopper 34 to push a supply powder 48 upward for receipt by the spreader 26. The spreader 26 may be a wiper, roller, sprayer or other device that pushes (see arrow 50), sprays or otherwise places the supply powder 48 over a top build surface 52 of the workpiece 38 by a predetermined thickness established by vertical, downward, movement (see arrow 54) of the build table 22 that supports the powder bed 24 and workpiece 38. Any excess powder 56 may be pushed into the surplus hopper 36 by the spreader 26.

Once a substantially level powder layer 30 is established over the build surface 52, the controller 42 may send a signal to the energy gun 28 that energizes a laser or electron beam device 58 and controls a directional mechanism 60 of the gun 28. The directional mechanism 60 may include a focusing lens that focuses a beam (see arrow 62) emitted from device 58 which, in-turn, may be deflected by an electromagnetic scanner or rotating mirror of the directional mechanism 60 so that the energy beam 62 selectively and controllably impinges upon, and thereby focuses a beam spot 64 on selected regions or portions 66 of the top layer 30 of the powder bed 24 (see FIG. 2). The beam spot 64 moves along the layer 30, see arrow 68, melting at least a portion of the layer, region-by-region, and at a controlled rate and power to form the region 66 into a melt pool, or melted state, and heat or partially melt the build surface 52 beneath the melt pool (i.e. meltback region) to promote the desired sintering and fusing of the powder and the joinder between slices 42. It is contemplated and understood that the powder 48 may not have an actual powder consistency (i.e. physical form), but may take the form of any raw material capable of being fused, sintered or melted upon a build surface of a workpiece and in accordance with additive manufacturing techniques. It is further understood and contemplated that the additive manufacturing system may include a method where fusing of powder is done by high-speed accumulation and then laser sintered (laser spray deposition).

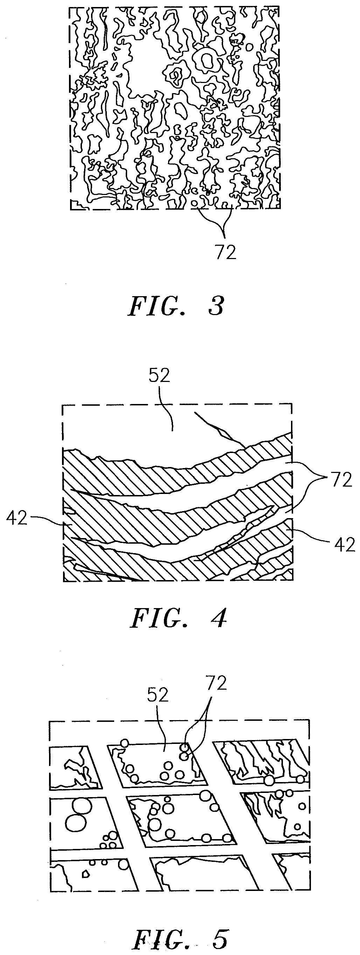

As a leading melt pool is created at the beam spot 64, the previous, trailing, melt pool begins to cool and solidify, thus forming a solidified region or portion 70 of the slice 42. The volumetric imaging monitor 32 is focused upon the portion 70 to detect any anomalies 72 and moves with the beam spot 64 in real-time. Therefore, portion 70 must be at a sufficient trailing distance away from the beam spot 64 to allow for solidification and as generally dictated by the speed that the spot 64 moves across the layer 30. An anomaly (72) includes at least one of warpage (see FIG. 3), delamination between slices indicative of surface distortion (see FIG. 4), and balling (see FIG. 5). Other additional anomalies may include undesired porosity, cracking, surface texture and/or degrees of surface roughness.

The volumetric imaging monitor 32 monitors volumetric surface texture. The term volumetric refers to a 'depth perception' ability of the monitor enabling height detection or height measurement of the slice surface (i.e. z-coordinate direction). Non-limiting examples of a volumetric, surface imaging, monitor include: a profilometer, an interferometer, a generally structured light for three-dimensional shape and profile measurement instrument, and X-ray scanner for sub-surface defects. All these examples are known instruments to those skilled in the art, and thus will not be further described. It is further understood and contemplated that the additive manufacturing system 20 may include a method where fusing of powder is done by high-speed accumulation and then laser sintered (laser spray deposition).

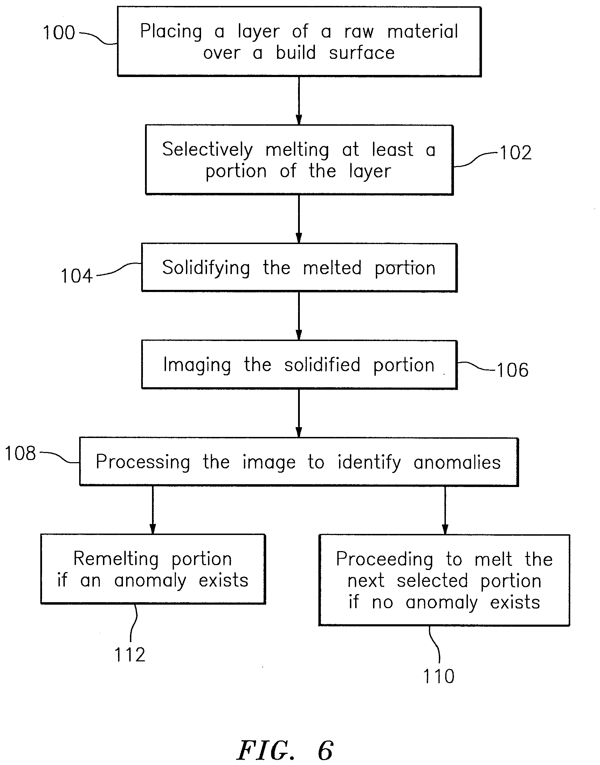

Referring to FIG. 6 and in operation, the additive manufacturing system 20 includes a step 100 where the controller 40 sends signals 44 to activate the supply hopper 34 to deliver a quantity of raw material 48 to the spreader 26. The spreader 26 then spreads or places a layer 30 of the raw material 48 over a build surface 52 of a preceding slice 42 of the workpiece 38. As a next step 102, the controller 40 sends a signal to initiate the energy gun 28 to selectively melt a portion 66 of the layer 30 into a melt pool. As a step 104, the energy gun 28 moves on to melt the next selected portion as the previously melted portion solidifies and becomes portion 70 of the slice 42. As step 106 and soon after the solidification of portion 70, the volumetric imaging monitor 32 images the solidified portion 70 and sends the data to the controller 40 for anomaly processing.

As step 108, the imaging data is processed in real-time for identification of an anomaly 72. As step 110, and if an anomaly 72 is not detected, the controller 40 continues with normal operations and the beam gun 28 continues to create melt pools at selected regions 66 and at a pre-established rate. As step 112 (coinciding with step 110) and if an anomaly 72 is detected, the controller 40 instructs the energy gun 28 to re-melt the region 70 with the anomaly 72 thereby removing the anomaly. Because the volumetric imaging monitor 32 operates in real-time, the imaging signals 44 may be continuously sent to the controller 40 for processing and identification of any anomalies 72. If the anomalies 72 appear systematically or too frequently, the controller 40 may function to change any number of operating parameters of the system 20. For instance, the controller 40 may signal a change in energy beam power, energy beam pulse repetition rate, energy beam pulse width, energy beam spot size and shape, energy beam hatching spacing (e.g. the space between energy beam travel tracks), and/or energy beam scan speed (e.g. the speed that the energy beam 62 travels over the layer 30).

After step 110 and with the anomaly 72 removed, the volumetric imaging monitor 32 may re-image the portion 70 of the slice 42 to confirm no anomaly exists and before resuming normal operation. With such real-time monitoring and correction of anomalies, the system 20 can prevent jamming or stoppage of the manufacturing process thereby saving time and expense while improving workpiece quality.

It is understood and contemplated that the imaging data sent to the controller 40 from the monitor 32 may be electronically stored thereby storing an 'anomaly record' of the entire workpiece. The volumetric imaging monitor 32 may also be used to monitor all sides of the workpiece 38 after manufacture and not just the build surface 52 of each slice 42.

Non-limiting examples of the raw material or powder 48 may include ceramics, metals, a mixture of ceramic, polymer and/or metal. Non-limiting examples of ceramics may include oxide ceramics such as Al2O3 or ZrO2, and nitride ceramics such as aluminum nitride, silicon nitride. Non-limiting examples of metals may include nickel or nickel alloys, titanium or titanium alloys, cobalt and cobalt alloys, ferrous metals such as steel alloys, stainless steel, and non-ferrous metals such as aluminum and bronze. Non-limiting examples of mixtures may include aluminum-silicon metal matrix composites, WC-Co cermets, polymer encapsulated SiC powders, and polymer-precused aluminum powders.

It is understood that relative positional terms such as "forward," "aft," "upper," "lower," "above," "below," and the like are with reference to the normal operational attitude and should not be considered otherwise limiting. It is also understood that like reference numerals identify corresponding or similar elements throughout the several drawings. It should be understood that although a particular component arrangement is disclosed in the illustrated embodiment, other arrangements will also benefit. Although particular step sequences may be shown, described, and claimed, it is understood that steps may be performed in any order, separated or combined unless otherwise indicated and will still benefit from the present disclosure.

## Claims

1. A powder-bed additive manufacturing system (20) comprising:
an energy gun (28) configured to melt at least a portion of a layer (30) and thereby form at least in part a slice (42) of a workpiece (38); and
a directional mechanism (60) that focuses a beam (62) of the energy gun (28) as a beam spot (64) on the portion (66) of the layer (30) to form a melt pool; and
a controller (40) that causes the beam spot (64) to move along the layer (30) at a controlled rate and power;
**characterised in that** the system further comprises:
a volumetric imaging monitor (32) having a depth perception ability and being configured to monitor volumetric surface texture to detect surface anomalies (72) of the portion after solidification,
wherein the controller (40) causes the volumetric imaging monitor (32) to move with the beam spot (64) at the controlled rate in real time, and trail the beam spot (64) by a distance that allows for the solidification and if an anomaly (72) is detected, the controller (40) causes the energy gun (28) to re-melt a region (70) with the anomaly (72) thereby removing the anomaly (72);
wherein the surface anomalies (72) include at least one of balling, warping and surface distortion.

2. The powder-bed additive manufacturing system set forth in claim 1, wherein the anomalies (72) further include at least one of porosity and cracking.

3. The powder-bed additive manufacturing system set forth in any preceding claim, wherein the energy gun (28) is a laser gun or an electron beam gun.

4. The powder-bed additive manufacturing system set forth in any preceding claim, wherein the volumetric imaging monitor (32) is an interferometer.

5. The additive manufacturing system set forth in any of claims 1 to 3, wherein the volumetric imaging monitor (32) is a profilometer.

6. A method of operating a powder-bed additive manufacturing system (20) comprising the steps of:
forming at least a portion of a slice (42) of a workpiece (38);
taking an image of and monitoring a volumetric surface texture of a surface (52) of at least the portion of the slice (42) with a volumetric imaging monitor (32); and
identifying an anomaly (72) of the surface (52) through the image by processing of image data sent to a controller (40) by the volumetric imaging monitor (32),
**characterised in that** the volumetric imaging monitor has a depth perception ability; and
the method further comprises the steps of re-working the portion to remove the anomaly (72), wherein the step of re-working is performed by re-melting the anomaly (72) with an energy gun (28);
wherein the anomaly (72) includes at least one of balling, warping and surface distortion.

7. The method set forth in claim 6, wherein forming at least a portion includes the steps of:
creating a melt pool in a layer (30) of a raw material with the energy gun (28); and
solidifying the melt pool.

8. The method set forth in claim 7, comprising the further step of:
forming a second portion of the slice (42) through the creation of another melt pool in the layer with the energy gun (28);
solidifying the second portion; and
monitoring a surface of the second portion for an anomaly (72).

## Patentansprüche

1. Pulverbettsystem zur additiven Fertigung (20), umfassend:
einen Energiestrahler (28), der dazu konfiguriert ist, mindestens einen Abschnitt einer Schicht (30) zu schmelzen und somit zumindest teilweise eine Scheibe (42) eines Werkstücks (38) herzustellen; und
einen Richtungsmechanismus (60), der einen Strahl (62) des Energiestrahlers (28) als einen Strahlfleck (64) auf den Abschnitt (66) der Schicht (30) bündelt, um ein Schmelzbad zu bilden; und
eine Steuerung (40), die bewirkt, dass sich der Strahlfleck (64) entlang der Schicht (30) mit einer gesteuerten Geschwindigkeit und Energie bewegt;
**dadurch gekennzeichnet, dass** das System ferner Folgendes umfasst:
ein volumetrisches Bildgebungsüberwachungsgerät (32), das eine Fähigkeit zur Tiefenwahrnehmung aufweist und dazu konfiguriert ist, die volumetrische Oberflächentextur zu überwachen, um Oberflächenanomalien (72) des Abschnitts nach der Erstarrung zu erkennen,
wobei die Steuerung (40) bewirkt, dass sich das volumetrisches Bildgebungsüberwachungsgerät (32) mit dem Strahlfleck (64) mit der gesteuerten Geschwindigkeit in Echtzeit bewegt und den Strahlfleck (64) in einem Abstand verfolgt, der die Erstarrung ermöglicht, und wobei die Steuerung (40), wenn eine Anomalie (72) erkannt wird, bewirkt, dass der Energiestrahler (28) einen Bereich (70) mit der Anomalie (72) nochmals schmilzt, wodurch die Anomalie (72) entfernt wird;
wobei die Oberflächenanomalien (72) mindestens eines aus Kugelbildung, Verwerfung und Oberflächenwölbung beinhalten.

2. Pulverbettsystem zur additiven Fertigung nach Anspruch 1, wobei die Anomalien (72) ferner mindestens eines aus Porosität und Rissbildung beinhalten.

3. Pulverbettsystem zur additiven Fertigung nach einem der vorstehenden Ansprüche, wobei der Energiestrahler (28) eine Laserkanone oder eine Elektronenstrahlkanone ist.

4. Pulverbettsystem zur additiven Fertigung nach einem der vorstehenden Ansprüche, wobei das volumetrische Bildgebungsüberwachungsgerät (32) ein Interferometer ist.

5. Pulverbettsystem zur additiven Fertigung nach einem der Ansprüche 1 bis 3, wobei das volumetrische Bildgebungsüberwachungsgerät (32) ein Profilometer ist.

6. Verfahren zum Betreiben eines Pulverbettsystems zur additiven Fertigung (20), umfassend die folgenden Schritte:
Herstellen mindestens eines Abschnitts einer Scheibe (42) eines Werkstücks (38);
Aufnehmen eines Bildes und Überwachen einer volumetrischen Oberflächentextur einer Oberfläche (52) mindestens eines Abschnitts der Scheibe (42) mit einem volumetrischen Bildgebungsüberwachungsgerät (32); und
Identifizieren einer Anomalie (72) der Oberfläche (52) durch das Bild durch Verarbeiten von Bilddaten, die von dem Bildgebungsüberwachungsgerät (32) an eine Steuerung (40) gesendet werden,
**dadurch gekennzeichnet, dass** das Bildgebungsüberwachungsgerät eine Fähigkeit zur Tiefenwahrnehmung aufweist; und
wobei das Verfahren ferner die Schritte des Überarbeitens des Abschnitts, um die Anomalie (72) zu entfernen, umfasst, wobei der Schritt des Überarbeitens durch erneutes Schmelzen der Anomalie (72) mit einem Energiestrahler (28) durchgeführt wird;
wobei die Anomalie (72) mindestens eines aus Kugelbildung, Verwerfung und Oberflächenwölbung beinhaltet.

7. Verfahren nach Anspruch 6, wobei das Herstellen mindestens eines Abschnitts die folgenden Schritte umfasst:
Erzeugen eines Schmelzbads in einer Schicht (30) eines Rohmaterials mit dem Energiestrahler (28); und
Erstarrenlassen des Schmelzbads.

8. Verfahren nach Anspruch 7, umfassend den weiteren folgenden Schritt:
Herstellen eines zweiten Abschnitts der Scheibe (42) durch das Erzeugen eines weiteren Schmelzbads in der Schicht mit dem Energiestrahler (28);
Erstarrenlassen des zweiten Abschnitts; und
Überwachen einer Oberfläche des zweiten Abschnitts auf eine Anomalie (72).

## Revendications

1. Système d'impression 3D à lit de poudre (20) comprenant :
un pistolet à énergie (28) configuré pour faire fondre au moins une partie d'une couche (30) et ainsi former au moins en partie une tranche (42) d'une pièce (38) ; et
un mécanisme directionnel (60) qui focalise un faisceau (62) du pistolet à énergie (28) en tant que point de faisceau (64) sur la partie (66) de la couche (30) pour former un bassin de fusion ; et
un dispositif de commande (40) qui amène le point de faisceau (64) à se déplacer le long de la couche (30) à une vitesse et à une puissance commandées ;
**caractérisé en ce que** le système comprend en outre :
un moniteur d'imagerie volumétrique (32) ayant une capacité de perception de profondeur et étant configuré pour surveiller la texture de surface volumétrique afin de détecter des anomalies de surface (72) de la partie après solidification,
dans lequel le dispositif de commande (40) amène le moniteur d'imagerie volumétrique (32) à se déplacer avec le point de faisceau (64) à la vitesse commandée en temps réel, et à suivre le point de faisceau (64) sur une distance qui permet la solidification et si une anomalie (72) est détectée, le dispositif de commande (40) amène le pistolet à énergie (28) à refondre une région (70) avec l'anomalie (72) éliminant ainsi l'anomalie (72) ;
dans lequel les anomalies de surface (72) comportent au moins l'un d'un bourrage, d'une déformation et d'une distorsion de surface.

2. Système d'impression 3D à lit de poudre selon la revendication 1, dans lequel les anomalies (72) comportent en outre au moins l'une de la porosité et de la fissuration.

3. Système d'impression 3D à lit de poudre selon une quelconque revendication précédente, dans lequel le pistolet à énergie (28) est un pistolet laser ou un pistolet à faisceau d'électrons.

4. Système d'impression 3D à lit de poudre selon une quelconque revendication précédente, dans lequel le moniteur d'imagerie volumétrique (32) est un interféromètre.

5. Système d'impression 3D selon l'une quelconque des revendications 1 à 3, dans lequel le moniteur d'imagerie volumétrique (32) est un profilomètre.

6. Procédé de fonctionnement d'un système d'impression 3D à lit de poudre (20) comprenant les étapes :
de formation d'au moins une partie d'une tranche (42) d'une pièce (38) ;
de prise d'une image et de surveillance d'une texture de surface volumétrique d'une surface (52) d'au moins la partie de la tranche (42) avec un moniteur d'imagerie volumétrique (32) ; et
d'identification d'une anomalie (72) de la surface (52) à travers l'image par le traitement de données d'image envoyées à un dispositif de commande (40) par le moniteur d'imagerie volumétrique (32),
**caractérisé en ce que** le moniteur d'imagerie volumétrique a une capacité de perception de profondeur ; et
le procédé comprend en outre les étapes de retravail de la partie pour éliminer l'anomalie (72), dans lequel l'étape de retravail est effectuée en refondant l'anomalie (72) avec un pistolet à énergie (28) ;
dans lequel l'anomalie (72) comporte au moins l'un d'un bourrage, d'une déformation et d'une distorsion de surface.

7. Procédé selon la revendication 6, dans lequel la formation d'au moins une partie comporte les étapes :
de création d'un bassin de fusion dans une couche (30) d'une matière première avec le pistolet à énergie (28) ; et
de solidification du bassin de fusion.

8. Procédé selon la revendication 7, comprenant l'étape supplémentaire :
de formation d'une seconde partie de la tranche (42) à travers la création d'un autre bassin de fusion dans la couche avec le pistolet à énergie (28) ;
de solidification de la seconde partie ; et
de surveillance d'une surface de la seconde partie pour détecter une anomalie (72)
